# EUROPEAN PATENT APPLICATION

(11) **EP 2 703 958 A1**
(43) Date of publication of application: **05.03.2014**
(21) Application number: 13180173.0
(22) Date of filing: 13.08.2013
(51) Int. Cl.: G06F 3/023, G06F 3/0488

(54) **Method and apparatus for optimizing handwriting input method**

(30) Priority: 28.08.2012 CN 201210310398
(71) Applicant: Huawei Device Co., Ltd., Longgang District Shenzhen Guangdong 518129 (CN)
(72) Inventor: Wei, Konggang, 518129 Shenzhen (CN); Zhong, Guanghua, 518129 Shenzhen (CN)
(74) Representative: Maiwald Patentanwalts GmbH

(57) **Abstract**

Embodiments of the present invention relate to the communications field, and provide a method and an apparatus for optimizing a handwriting input method, used for increasing an input correctness percentage and an input rate of an input method. The method includes: obtaining a position in which a cursor is located; obtaining a first content and a second content of the position in which the cursor is located, where the first content is a character related to the foregoing text of the position in which the cursor is located and the second content is a character related to the following text of the position in which the cursor is located; and determining a candidate character according to the first content and/or the second content, an input method dictionary, and a character handwritten and input by a user, and displaying the candidate character. The embodiments of the present invention are applicable to a scenario where an input method determines a candidate character.

## Description

### TECHNICAL FIELD

The present invention relates to the communications field, and in particular, to a method and an apparatus for optimizing a handwriting input method.

### BACKGROUND

With the continuous development of user terminals, input methods also develop rapidly. Handwriting input methods become more and more popular among user terminals with a touch function. Existing handwriting input methods determine a character by identifying strokes currently input by users. Because handwriting habits of different users and shapes of written character strokes are different, an identification rate of an input method may vary for different users. In an input method, each time after a stroke is input, several characters related to the stroke are predicted, and one character is selected by default, and after a default selected character is chosen, a next character may be directly input. Because the input method itself does not know which character a user wants to input, the default selected character determined according to the shape of the stroke may not be a character required by the user, and in this case, the user needs to search again for another character to find out the character required by the user, thereby decreasing an input correctness percentage and an input rate of the input method.

### SUMMARY

Embodiments of the present invention provide a method and an apparatus for optimizing a handwriting input method, which are used for increasing an input correctness percentage and an input rate of the input method.

In order to achieve the foregoing objectives, the embodiments of the present invention adopt the following technical solutions.

According to a first aspect of the present invention, a method for optimizing a handwriting input method includes: obtaining a position in which a cursor is located; obtaining a first content and a second content of the position in which the cursor is located, where the first content is a character related to the foregoing text of the position in which the cursor is located and the second content is a character related to the following text of the position in which the cursor is located; and if the first content is not empty and/or the second content is not empty, determining a candidate character according to the first content and/or the second content, an input method dictionary, and a character handwritten and input by a user, and displaying the candidate character.

In a first possible implementation manner of the first aspect, the obtaining a first content and a second content of the position in which the cursor is located includes: obtaining, by using a method for registering an application programming interface API hook, the first content and the second content of the position in which the cursor is located.

With reference to the first aspect or the first possible implementation manner of the first aspect, in a second possible implementation manner, the determining a candidate character according to the first content and/or the second content, an input method dictionary, and an input character includes: if the first content is empty and the second content is not empty, determining the candidate character according to the second content, the input method dictionary, and the input character.

With reference to the first aspect or the first possible implementation manner of the first aspect, in a third possible implementation manner, the determining a candidate character according to the first content and/or the second content, an input method dictionary, and an input character includes: if the first content is not empty and the second content is empty, determining the candidate character according to the first content, the input method dictionary, and the input character.

With reference to the first aspect or the first possible implementation manner of the first aspect, in a fourth possible implementation manner, the determining a candidate character according to the first content and/or the second content, an input method dictionary, and an input character includes: if the first content is not empty and the second content is not empty, determining the candidate character according to the first content, the input method dictionary, and the input character; or, determining the candidate character according to the second content, the input method dictionary, and the input character; or, determining the candidate character according to the first content and the second content, the input method dictionary, and the input character.

According to a second aspect of the present invention, an apparatus for optimizing a handwriting input method includes: an obtaining unit, configured to obtain a position in which a cursor is located, where the obtaining unit is further configured to obtain a first content and a second content of the position in which the cursor is located, where the first content is a character related to the foregoing text of the position in which the cursor is located and the second content is a character related to the following text of the position in which the cursor is located; a determining unit, configured to determine a candidate character according to the first content and/or the second content, an input method dictionary, and a character handwritten and input by a user; and a displaying unit, configured to display the candidate character.

In a first possible implementation manner of the second aspect, the obtaining unit is specifically configured to obtain, by using a method for registering an application programming interface API hook, the first content and the second content of the position in which the cursor is located.

With reference to the second aspect or the first possible implementation manner of the second aspect, in a second possible implementation manner, the determining unit is specifically configured to: in a case that the first content is empty and the second content is not empty, determine the candidate character according to the second content, the input method dictionary, and the input character.

With reference to the second aspect or the first possible implementation manner of the second aspect, in a third possible implementation manner, the determining unit is specifically configured to: in a case that the first content is not empty and the second content is empty, determine the candidate character according to the first content, the input method dictionary, and the input character.

With reference to the second aspect or the first possible implementation manner of the second aspect, in a fourth possible implementation manner, the determining unit is specifically configured to: in a case that the first content is not empty and the second content is not empty, determine the candidate character according to the first content, the input method dictionary, and the input character; or, determine the candidate character according to the second content, the input method dictionary, and the input character; or, determine the candidate character according to the first content and the second content, the input method dictionary, and the input character.

According to a third aspect of the present invention, a mobile terminal includes: a processor, configured to obtain a position in which a cursor is located; obtain a first content and a second content of the position in which the cursor is located, where the first content is a character related to the foregoing text of the position in which the cursor is located and the second content is a character related to the following text of the position in which the cursor is located; and determine a candidate character according to the first content and/or the second content, an input method dictionary, and a character handwritten and input by a user that is received by a receiver, and send the candidate character to a display; a memory, configured to cache the first content and the second content obtained by the processor, store the input method dictionary, and cache the character input by the user and received by the receiver; the receiver, configured to receive the character input by the user; and a display, configured to display the candidate character.

In a first possible implementation manner of the third aspect, the processor is specifically configured to obtain, by using a method for registering an application programming interface API hook, the first content and the second content of the position in which the cursor is located.

With reference to the third aspect or the first possible implementation manner of the third aspect, in a second possible implementation manner, the processor is specifically configured to: in a case that the first content is empty and the second content is not empty, determine the candidate character according to the second content, the input method dictionary, and the input character.

With reference to the third aspect or the first possible implementation manner of the third aspect, in a third possible implementation manner, the processor is specifically configured to: in a case that the first content is not empty and the second content is empty, determine the candidate character according to the first content, the input method dictionary, and the input character.

With reference to the third aspect or the first possible implementation manner of the third aspect, in a fourth possible implementation manner, the processor is specifically configured to: in a case that the first content is not empty and the second content is not empty, determine the candidate character according to the first content, the input method dictionary, and the input character; or, determine the candidate character according to the second content, the input method dictionary, and the input character; or, determine the candidate character according to the first content and the second content, the input method dictionary, and the input character.

The embodiments of the present invention provide a method and an apparatus for optimizing a handwriting input method. A position in which a cursor is located is obtained, a first content and a second content of the position in which the cursor is located are obtained; and a candidate character is determined according to the obtained first content and/or second content, an input method dictionary, and a character handwritten and input by a user, and the candidate character is displayed for a user to choose. In this way, by providing a candidate character determined according to a character in the foregoing text and/or a character in the following text already input by a user, the probability that the displayed candidate character is a character required by the user is greatly increased, thereby increasing an input correctness percentage and an input rate of an input method.

### BRIEF DESCRIPTION OF DRAWINGS

To illustrate the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a method for optimizing a handwriting input method according to an embodiment of the present invention;
FIG. 2 is a schematic structural diagram of an apparatus for optimizing a handwriting input method according to an embodiment of the present invention; and
FIG. 3 is a schematic structural diagram of another apparatus for optimizing a handwriting input method according to an embodiment of the present invention.

### DESCRIPTION OF EMBODIMENTS

The following clearly and completely describes the technical solutions in the embodiments of the present invention with reference to accompanying drawings in the embodiments of the present invention. Apparently, the described embodiments are merely a part rather than all of the embodiments of the present invention. All other embodiments obtained by persons of ordinary skill in the art according to an embodiment of the present invention without creative efforts shall fall within the protection scope of the present invention.

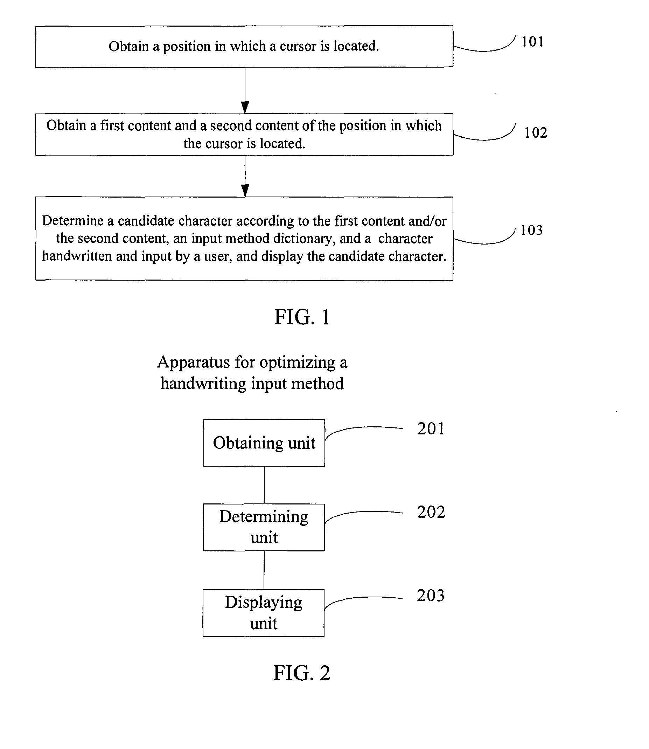

An embodiment of the present invention provides a method for optimizing a handwriting input method, as shown in FIG. 1, including:
101: Obtain a position in which a cursor is located.

Specifically, when a user needs to input a character, the user moves a cursor to a position in which the character needs to be input, and determines the position of the cursor, thereby to obtain the position in which the cursor is located. For example, when a user needs to insert a character in a certain row, the user moves a cursor to a position in which the character needs to be input, and then, obtains the position in which the cursor is located.

102: Obtain a first content and a second content of the position in which the cursor is located.

The first content is a character related to the foregoing text of the position in which the cursor is located. The second content is a character related to the following text of the position in which the cursor is located.

It should be noted that, the maximum number of contained characters in the first content and the maximum number of contained characters in the second content are preset. The maximum number of contained characters in the first content and the maximum number of contained characters in the second content may be the same, and also may be different, which is not limited by the present invention.

Optionally, a character of the foregoing text of the position in which the cursor is located is obtained according to the preset maximum number of contained characters in the first content. A character of the following text of the position in which the cursor is located is obtained according to the preset maximum number of contained characters in the second content.

It should be noted that, if the number of characters of the foregoing text of the position in which the cursor is located is not larger than the maximum number of contained characters in the first content, all the characters of the foregoing text of the position in which the cursor is located are used as the first content. If the number of characters of the following text of the position in which the cursor is located is not larger than the maximum number of contained characters in the second content, all the characters of the following text of the position in which the cursor is located are used as the second content.

Exemplarily, if a content already input by a user is: " 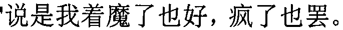 " and if the maximum number of contained characters in a first content is preset to 3 characters, and the maximum number of contained characters in a second content is preset to 2 characters, and then, if the user wants to add a content before 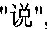 the user moves the cursor before 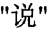 , and in this case, a first content and a second content of the position in which the cursor is located are obtained. Because the foregoing text of the position in which the cursor is located does not exist, the obtained first content is empty. The obtained second content is 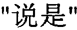 .

If the user wants to add a content before 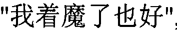 , the user moves the cursor before 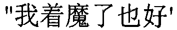 and after 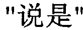 , and in this case, a first content and a second content of the position in which the cursor is located are obtained. Because the number of characters in the foregoing text of the position in which the cursor is located is only 2, which is smaller than 3, the maximum number of contained characters in the first content, all the characters of the foregoing text are used as the first content, that is, 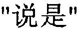 is obtained as the first content. The obtained second content is 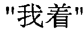 .

If the user wants to add a content after 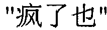 and before 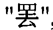 , the user moves the cursor after 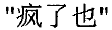 and before 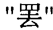 , and in this case, a first content and a second content of the position in which the cursor is located are obtained. The obtained first content is 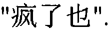 Because the number of characters in the following text of the position in which the cursor is located is only 1, which is smaller than 2, the maximum number of contained characters in the second content, all the characters of the following text are used as the second content, that is, " 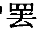 " is obtained as the second content.

If the user wants to add a content after 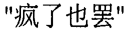 , the user moves the cursor after " 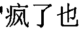 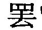 ", and in this case, a first content and a second content of the position in which the cursor is located are obtained. The obtained first content is 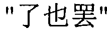 . Because the following text of the position in which the cursor is located does not exist, the obtained second content is empty.

The foregoing is a Chinese example, and the following takes English input as an example. If a content already input by a user is: "The first step is as good as half over", and if the maximum number of contained words in a first content is preset to 3 words, and the maximum number of contained words in a second content is preset to 2 words, and then, if the user wants to add a content before "is", the user moves the cursor before "is", and in this case, a first content and a second content of the position in which the cursor is located are obtained. The obtained first content is "The first step", and the obtained second content is "is as".

The following, again, takes Japanese input as an example. If a content already input by a user is: 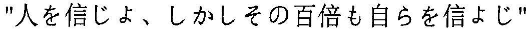 , and if the maximum number of contained characters in a first content is preset to 3 characters, and the maximum number of contained characters in a second content is preset to 2 characters, and then, if the user wants to add a content before 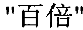 , the user moves the cursor before 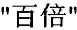 , and in this case, a first content and a second content of the position in which the cursor is located are obtained. The obtained first content is 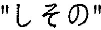 , and the obtained second content is 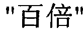 .

Further, the first content and the second content of the position in which the cursor is located are obtained by using a method for registering an API (Application Programming Interface, application programming interface) hook.

103: Determine a candidate character according to the first content and/or the second content, an input method dictionary, and a character handwritten and input by a user, and display the candidate character.

Specifically, if the first content is not empty and/or the second content is not empty, the candidate character is determined according to the first content and/or the second content, the input method dictionary, and the character handwritten and input by the user, and the candidate character is displayed.

If the first content is empty and the second content is not empty, the candidate character is determined according to the second content, the input method dictionary, and the input character.

Like what is described in the foregoing example, if the content already input by the user is: 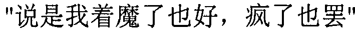 , and if the user needs to add a character 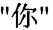 before 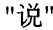 , the user moves the cursor before 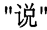 . Then, the obtained first content is empty, and the obtained second content is 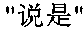 . If a character handwritten and input by the user is a left-falling stroke, according to the second content 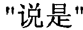 , an input method dictionary, and the left-falling stroke handwritten and input by the user, it is determined that candidate characters are: 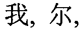 and 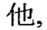 and other characters that have a left-falling stroke and are related to 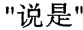 , and the candidate characters are displayed. When the user finds that the displayed candidate characters do not contain the character that the user wants to input, a character that the user continues to input is a vertical stroke. According to the second content 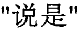 , the input method dictionary, and the left-falling stroke and the vertical stroke handwriting input by the user, determine that candidate characters are: 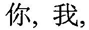 and 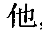 , and other characters that have a left-falling stroke and a vertical stroke and are related to 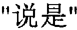 , where 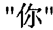 is a default selected character. After the candidate characters are displayed, the user directly chooses, and goes into inputting of a next character.

If the first content is not empty and the second content is empty, the candidate character is determined according to the first content, the input method dictionary, and the input character.

If the first content is not empty and the second content is not empty, the candidate character is determined according to the first content, the input method dictionary, and the input character. Alternatively, the candidate character is determined according to the second content, the input method dictionary, and the input character. Alternatively, the candidate character is determined according to the first content and the second content, the input method dictionary, and the input character.

That is to say, the candidate character is determined according to a character related to the first content or the second content or a character related to the first content and the second content, the input method dictionary, and the input character.

It should be noted that, in all embodiments of the present invention, the character related to the first content or the second content or the character related to the first content and the second content refers to that can form a word, an idiom, a frequently used expression, or another type of character together with the first content or the second content or with the first content and the second content.

It should be noted that, if the first content and the second content both are non-Chinese characters, for example, other characters such as letters and numbers, a determined candidate character is preferably a character of the same type as the first content and the second content. If characters of the first content and the second content are not of the same type, preferably matching the first content or preferably matching the second content may be preset.

It should be noted that, when the first content and the second content both are empty, candidate character is determined according to the character handwritten and input by the user and the input method dictionary.

The embodiment of the present invention provides a method for optimizing a handwriting input method. A position in which a cursor is located is obtained, a first content and a second content of the position in which the cursor is located are obtained; and a candidate character is determined according to the obtained first content and/or second content, an input method dictionary, and a character handwritten and input by a user, and the candidate character is displayed for a user to choose. In this way, by providing a candidate character determined according to a character in the foregoing text and/or a character in the following text already input by a user, the probability that the displayed candidate character is a character required by the user is greatly increased, increasing an input correctness percentage and an input rate of an input method.

An embodiment of the present invention provides an apparatus for optimizing a handwriting input method, as shown in FIG. 2, including:
An obtaining unit 201 is configured to obtain a position in which a cursor is located.

The obtaining unit 201 is further configured to obtain a first content and a second content of the position in which the cursor is located.

The first content is a character related to the foregoing text of the position in which the cursor is located and the second content is a character related to the following text of the position in which the cursor is located.

Optionally, the obtaining unit 201 is specifically configured to obtain, by using a method for registering an application programming interface API hook, the first content and the second content of the position in which the cursor is located.

A determining unit 202 is configured to determine a candidate character according to the first content and/or the second content, an input method dictionary, and a character handwritten and input by a user.

The determining unit 202 is specifically configured to: in a case that the first content is not empty and the second content is empty, determine the candidate character according to the first content, the input method dictionary, and the input character.

Alternatively, the determining unit 202 is specifically configured to: in a case that the first content is not empty and the second content is not empty, determine the candidate character according to the first content, the input method dictionary, and the input character.

Alternatively, the determining unit 202 is specifically configured to: in a case that the first content is not empty and the second content is not empty, determine the candidate character according to the second content, the input method dictionary, and the input character.

Alternatively, the determining unit 202 is specifically configured to: in a case that the first content is not empty and the second content is not empty, determine the candidate character according to the first content and the second content, the input method dictionary, and the input character.

A displaying unit 203 is configured to display the candidate character.

The embodiment of the present invention provides an apparatus for optimizing a handwriting input method. a position in which a cursor is located is obtained, a first content and a second content of the position in which the cursor is located are obtained; and a candidate character is determined according to the obtained first content and/or second content, an input method dictionary, and a character handwritten and input by a user, and the candidate character is displayed for a user to choose. In this way, by providing a candidate character determined according to a character in the foregoing text and/or a character in the following text already input by a user, the probability that the displayed candidate character is a character required by the user is greatly increased, increasing an input correctness percentage and an input rate of an input method.

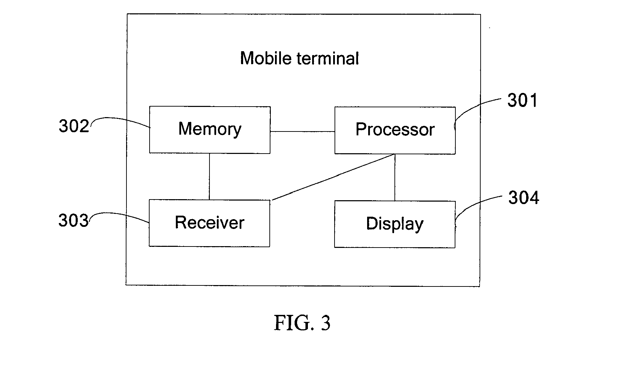

An embodiment of the present invention provides a mobile terminal, as shown in FIG. 3, including:
A processor 301 is configured to obtain a position in which a cursor is located; obtain a first content and a second content of the position in which the cursor is located; and determine a candidate character according to the first content and/or the second content, an input method dictionary, and a character handwritten and input by a user that is received by a receiver, and send the candidate character to a display.

The first content is a character related to the foregoing text of the position in which the cursor is located and the second content is a character related to the following text of the position in which the cursor is located.

Specifically, the processor 301 is specifically configured to obtain, by using a method for registering an application programming interface API hook, the first content and the second content of the position in which the cursor is located.

Further, the processor 301 is specifically configured to: in a case that the first content is empty and the second content is not empty, determine the candidate character according to the second content, the input method dictionary, and the input character; or, in a case that the first content is not empty and the second content is empty, determine the candidate character according to the first content, the input method dictionary, and the input character; or, in a case that the first content is not empty and the second content is not empty, determine the candidate character according to the first content, the input method dictionary, and the input character; or, in a case that the first content is not empty and the second content is not empty, determine the candidate character according to the second content, the input method dictionary, and the input character; or, in a case that the first content is not empty and the second content is not empty, determine the candidate character according to the first content and the second content, the input method dictionary, and the input character.

A memory 302 is configured to cache the first content and the second content obtained by the processor, store the input method dictionary, and cache the character input by the user and received by the receiver.

The receiver 303 is configured to receive the character input by the user.

The display 304 is configured to display the candidate character.

The embodiment of the present invention provides a mobile terminal. By using a processor, a position in which a cursor is located is obtained, and a first content and a second content of the position in which the cursor is located are obtained; and a candidate character is determined according to the obtained first content and/or second content, an input method dictionary, and a character handwritten and input by a user, and the candidate character is displayed by using a display for a user to choose. In this way, by providing a candidate character determined according to a character in the foregoing text and/or a character in the following text already input by a user, the probability that the displayed candidate character is a character required by the user is greatly increased, increasing an input correctness percentage and an input rate of an input method.

Persons of ordinary skill in the art can understand that, all or part of the steps of the foregoing method embodiments may be implemented by a program instructing related hardware. The foregoing program may be stored in a computer readable storage medium. When the program runs, the steps included in the foregoing method embodiments are performed. The foregoing storage medium includes various media capable of storing program codes, such as a ROM, a RAM, a magnetic disk, or an optical disk.

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for optimizing a handwriting input method, comprising:
obtaining a position in which a cursor is located;
obtaining a first content and a second content of the position in which the cursor is located, wherein the first content is a character related to the foregoing text of the position in which the cursor is located and the second content is a character related to the following text of the position in which the cursor is located; and
determining a candidate character according to the first content and/or the second content, an input method dictionary, and a character handwritten and input by a user, and displaying the candidate character.

2. The method according to claim 1, wherein the obtaining a first content and a second content of the position in which the cursor is located comprises:
obtaining, by using a method for registering an application programming interface API hook, the first content and the second content of the position in which the cursor is located.

3. The method according to claim 1 or 2, wherein the determining a candidate character according to the first content and/or the second content, an input method dictionary, and an input character comprises: if the first content is empty and the second content is not empty, determining the candidate character according to the second content, the input method dictionary, and the input character.

4. The method according to claim 1 or 2, wherein the determining a candidate character according to the first content and/or the second content, an input method dictionary, and an input character comprises: if the first content is not empty and the second content is empty, determining the candidate character according to the first content, the input method dictionary, and the input character.

5. The method according to claim 1 or 2, wherein the determining a candidate character according to the first content and/or the second content, an input method dictionary, and an input character comprises: if the first content is not empty and the second content is not empty, determining the candidate character according to the first content, the input method dictionary, and the input character; or,
determining the candidate character according to the second content, the input method dictionary, and the input character; or,
determining the candidate character according to the first content and the second content, the input method dictionary, and the input character.

6. An apparatus for optimizing a handwriting input method, comprising:
an obtaining unit, configured to obtain a position in which a cursor is located, wherein
the obtaining unit is further configured to obtain a first content and a second content of the position in which the cursor is located, wherein the first content is a character related to the foregoing text of the position in which the cursor is located and the second content is a character related to the following text of the position in which the cursor is located;
a determining unit, configured to determine a candidate character according to the first content and/or the second content, an input method dictionary, and an input character; and
a displaying unit, configured to display the candidate character.

7. The apparatus according to claim 6, wherein the obtaining unit is specifically configured to obtain, by using a method for registering an application programming interface API hook, the first content and the second content of the position in which the cursor is located.

8. The apparatus according to claim 6 or 7, wherein the determining unit is specifically configured to: in a case that the first content is empty and the second content is not empty, determine the candidate character according to the second content, the input method dictionary, and the input character.

9. The apparatus according to claim 6 or 7, wherein the determining unit is specifically configured to: in a case that the first content is not empty and the second content is empty, determine the candidate character according to the first content, the input method dictionary, and the input character.

10. The apparatus according to claim 6 or 7, wherein the determining unit is specifically configured to: in a case that the first content is not empty and the second content is not empty, determine the candidate character according to the first content, the input method dictionary, and the input character; or,
determine the candidate character according to the second content, the input method dictionary, and the input character; or,
determine the candidate character according to the first content and the second content, the input method dictionary, and the input character.

11. A mobile terminal, comprising:
a processor, configured to obtain a position in which a cursor is located; obtain a first content and a second content of the position in which the cursor is located, wherein the first content is a character related to the foregoing text of the position in which the cursor is located and the second content is a character related to the following text of the position in which the cursor is located; and determine a candidate character according to the first content and/or the second content, an input method dictionary, and a character handwritten and input by a user that is received by a receiver, and send the candidate character to a display;
a memory, configured to cache the first content and the second content obtained by the processor, store the input method dictionary, and cache the character input by the user and received by the receiver;
the receiver, configured to receive the character input by the user; and
the display, configured to display the candidate character.

12. The terminal according to claim 11, wherein the processor is specifically configured to obtain, by using a method for registering an application programming interface API hook, the first content and the second content of the position in which the cursor is located.

13. The terminal according to claim 11 or 12, wherein the processor is specifically configured to: in a case that the first content is empty and the second content is not empty, determine the candidate character according to the second content, the input method dictionary, and the input character.

14. The terminal according to claim 11 or 12, wherein the processor is specifically configured to: in a case that the first content is not empty and the second content is empty, determine the candidate character according to the first content, the input method dictionary, and the input character.

15. The terminal according to claim 11 or 12, wherein the processor is specifically configured to: in a case that the first content is not empty and the second content is not empty, determine the candidate character according to the first content, the input method dictionary, and the input character; or,
determine the candidate character according to the second content, the input method dictionary, and the input character; or,
determine the candidate character according to the first content and the second content, the input method dictionary, and the input character.
